# EUROPEAN PATENT SPECIFICATION

(11) **EP 1 544 451 B1**
(45) Date of publication and mention of the grant of the patent: **28.05.2008**
(21) Application number: 04106697.8
(22) Date of filing: 17.12.2004
(51) Int. Cl.: F02M 35/104, F02M 35/112

(54) **Intake manifold in two parts and method for the production thereof**
Zweiteiler Ansaugkrümmer und Verfahren zur Herstellung
Collecteur d'admission en deux parties et son procédé de fabrication

(30) Priority: 19.12.2003 FR 0315067
(43) Date of publication of application: 22.06.2005
(73) Proprietor: Mark IV Systemes Moteurs (Société Anonyme), 92400 Courbevoie (FR)
(72) Inventor: Menin, Denis, 68125 Houssen (FR)
(74) Representative: Jorio, Paolo

(56) References cited:
- EP-A- 1 251 255
- WO-A-01/16473
- WO-A-02/35071
- DE-A- 19 941 035

## Description

The present invention relates to the field of motor vehicle equipment, more particularly the production of variable-flow intake manifolds or distributors and has for its object a variable intake manifold in two parts and a method of producing a manifold of this type.

Various constructions of manifolds of the aforementioned type, assembled from three or more separate constituent parts, are already known.

An intake manifold principally consisting of a hollow body defining an intake or plenum chamber and a plurality of pipes opening into said chamber at one of their ends is thus, in particular, known, see e.g. WO 0235071. At least some of said pipes are provided in the region of their opposite or free end(s) with a flow-regulating component, in the form of a pivoting valve device, fitted with its rotatory support shaft in an assembly site comprising a lateral opening provided in the wall of said pipe. The rotational drive elements of the support shafts, the control linkage driving said drive elements and the lateral openings forming or receiving bearings for said support shaft are covered by a protective sealing cap extending in the region of said free ends of the pipes.

This cap allows limitation, in the region of each assembly site, to a relative and imperfect seal, and also allows physical isolation of the moving pieces formed by the linkage and the drive elements from the exterior.

However, this cap is an extra piece to be introduced, involving an additional production process and assembly process, which are disadvantageous in terms of the cost of the manifold.

The main object of the present invention is to overcome the aforementioned drawback.

For this purpose, the invention relates to an intake manifold of the aforementioned type, characterised in that the hollow body is formed by two parts joined by welding, adhesion or the like in the region of cooperating and complementary peripheral assembly zones resulting from the partition of said hollow body into two structural components, in that a first single-piece part incorporates a first wall portion of the hollow body delimiting a part of the intake chamber and forming a part of the pipes, with, in particular, conduit portions forming the free ends of said pipes and comprising the fitting sites for the valve devices, and in that a second single-piece part incorporates, on the one hand, a second wall portion of the hollow body, which second portion is complementary to the first portion so as to delimit the intake chamber and form the pipes, and, on the other hand, an additional wall portion forming the protective sealing cap.

A better understanding of the invention will be facilitated by the following description, which relates to a preferred embodiment, given by way of a non-limiting example, and illustrated with reference to the accompanying schematic drawings, in which:
Figure 1 is a plan view of an intake manifold according to the invention;

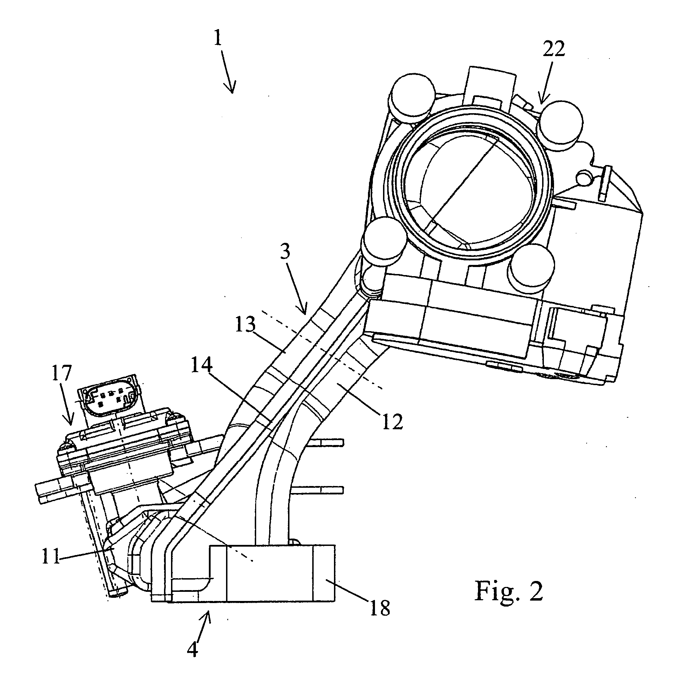

Figure 2 is a lateral elevation of the manifold shown in Figure 1;
Figure 3 is a plan view of the first constituent part of the hollow body of the manifold of Figure 1, the valve devices being in place;
Figure 4 is a cross-section along an axis of circulation of the fluid in a pipe of the manifold of Figure 1, and
Figure 5 is a partial view of a valve device as shown in Figure 5(*sic*), showing in detail the assembly of the bearing for guiding the support shaft, and the mechanical connection between the linkage and the drive element for the shaft.

As the figures of the accompanying drawings show, the intake manifold 1 principally consists of a hollow body 1' defining an intake or plenum chamber 2 and a plurality of pipes 3 opening into said chamber 2 at one of their ends, at least some of said pipes 3 being provided in the region of their opposite or free end(s) 4 with a flow-regulating component, in the form of a pivoting valve 5 device 6, fitted with its rotatory support shaft 7 in an assembly site comprising a lateral opening 8 provided in the wall of the pipe 3 in question. The rotational drive elements 9 of the support shafts 7, the control linkage 10 driving said drive elements 9 and the lateral openings 8 forming or receiving bearings for said support shafts 7 are covered by a protective sealing cap 11 extending in the region of said free ends 4 of the pipes 3.

According to the invention, the hollow body 1' is formed by two parts 12 and 13 joined by welding, adhesion or the like in the region of cooperating and complementary peripheral assembly zones 14 resulting from the partition of said hollow body 1' into two structural components. A first single-piece part 12 incorporates a first wall portion of the hollow body 1' delimiting a part of the intake chamber 2 and forming a part of the pipes 3, with, in particular, conduit portions 15 forming the free ends 4 of said pipes 3 and comprising the fitting sites for the valve devices 5. A second single-piece part 13 incorporates, on the one hand, a second wall portion of the hollow body 1', which second portion is complementary to the first portion so as to delimit the intake chamber 2 and form the pipes 3, and, on the other hand, an additional wall portion forming the protective sealing cap.

Despite a complex overall structure and the presence of valve-type regulating devices 5, in the region of some or all of the pipes 3, the body of the manifold 1 may thus be obtained by means of a single assembly process.

According to a preferred embodiment of the invention, each of the complementary constituent parts 12 and 13 of the hollow body 1' is a piece made of thermoplastic material, optionally filled or reinforced with fibres, produced by moulding, and the joining of said parts 12 and 13 results from a vibration welding process in the region of the cooperating assembly zones 14 of the two parts 12 and 13.

In the case of a conformation of the manifold 1 as shown in the accompanying drawings, i.e. an elongate intake chamber 2 with a substantially rectilinear structure and pipes 3 extending laterally from said chamber 2, in a substantially mutually coplanar manner, the surface supporting the assembly zones 14 cuts the wall delimiting said chamber 2, for example, into two in the longitudinal direction of said chamber 2, as do the pipes 3 in the direction of their respective centre line of fluid circulation, with the exception of their ends 4 (preservation of tubular conduit portions or sleeves 15 with a complete peripheral wall).

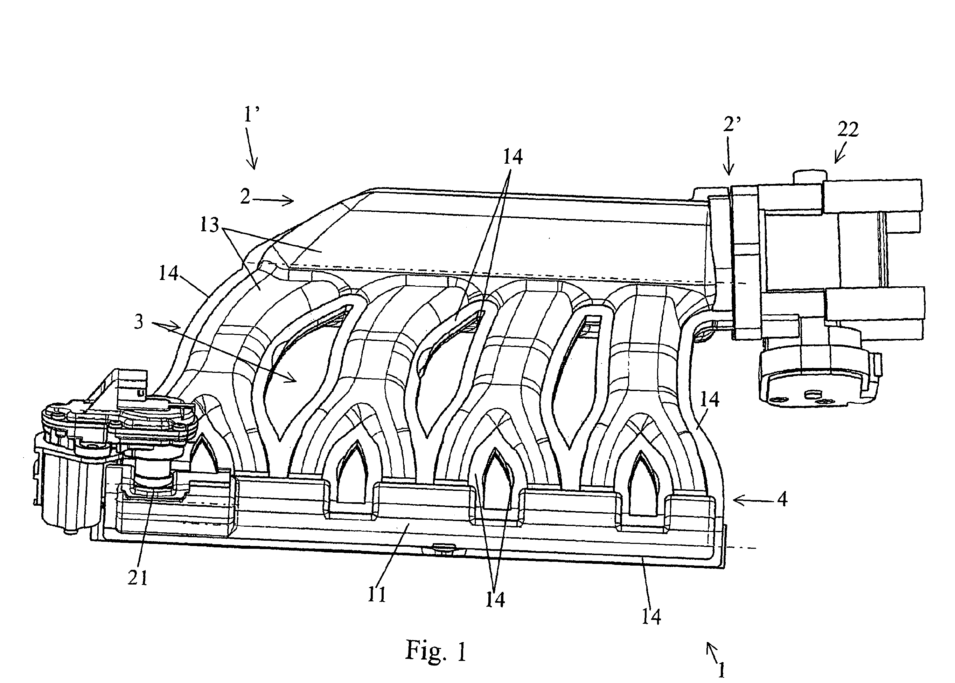

As Figures 1, 3 and 4 of the accompanying drawings show, the fitting sites for the valve devices 5 may advantageously be mutually aligned, and the wall portion 11 forming the cap have an elongate structure, said cap 11 being joined to the first constituent part 12 along two longitudinal edges of said cap 11.

Advantageously, each valve device 5 consists of a preassembled assembly to be inserted, comprising a valve body 6, its support shaft 7, the rotational drive element 9 therefor and a piece 16 optionally forming a sealing plug for the lateral assembly opening 8 and a bearing for holding and guiding the support shaft 7.

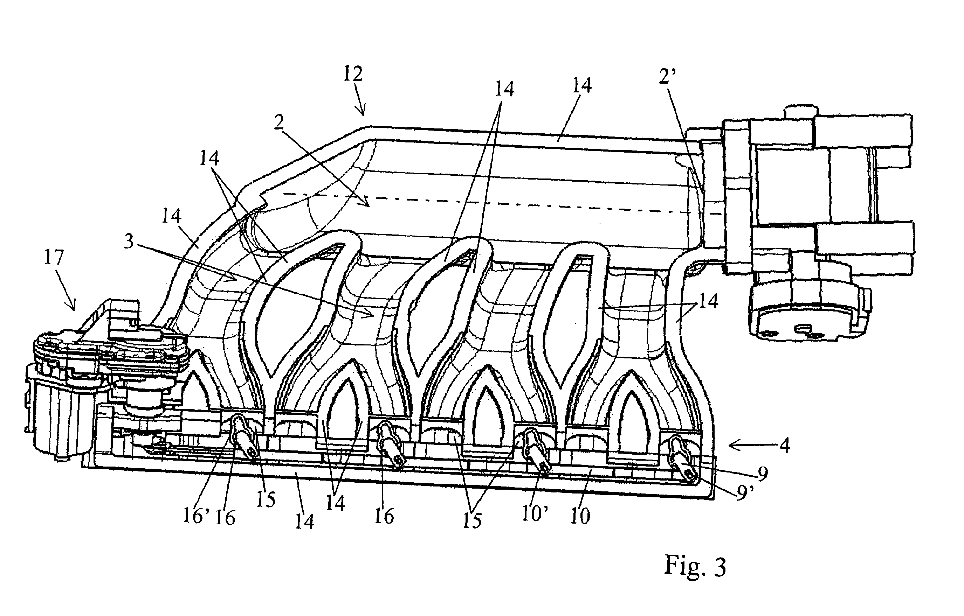

According to a preferred variation of the invention, shown in Figures 3, 4 and 5 of the accompanying drawings, the rotational drive element 9, which fastens the support shaft 7 of each valve device 5 in position, consists of a connecting link moulded onto the portion of the support shaft 7 that extends from the piece 16 forming the plug and bearing, said connecting link 9 comprising an opening 9' for receiving, with the possibility of pivoting, a finger or lug 10' forming part of the plurality of fingers or lugs 10' of a bar or rod 10 forming the control linkage and being able to be displaced in translation by an appropriate actuator 17 controlling the variable intake.

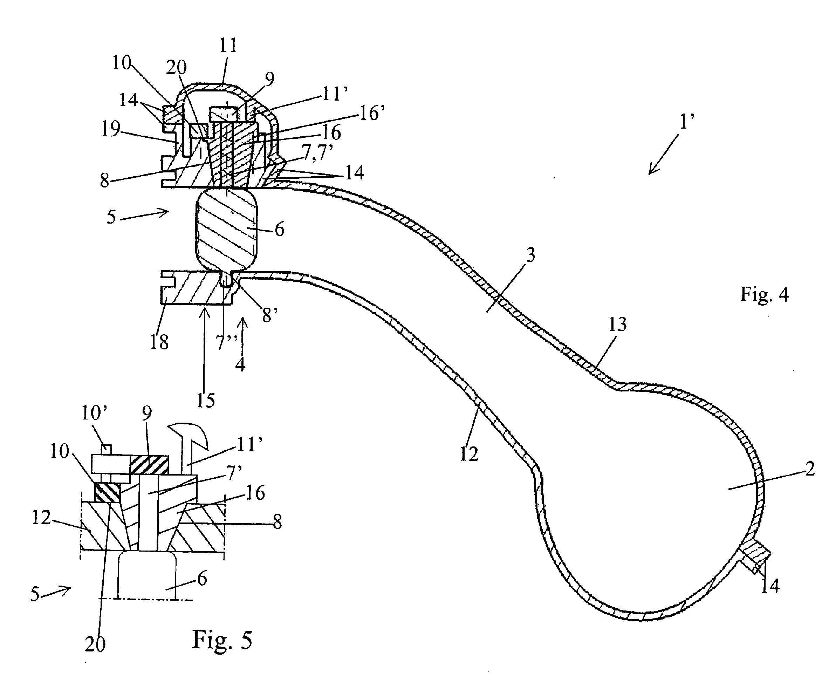

According to an advantageous characteristic of the invention, emerging from Figures 4 and 5 of the accompanying drawings, each assembly site consists, on the one hand, of a first lateral through-opening 8 provided in the wall of the conduit portion 15 forming the free end 4 of the pipe 3 in question and, on the other hand, of a second blind opening 8', also provided in said end conduit portion 15 and located facing the aforementioned through-opening 8 and coaxially thereto. Said first opening 8 receives the bearing 16 of the support shaft 7 of the valve device 5 installed in the region of said assembly site, together with a first part 7' protruding laterally from said shaft 7 relative to the valve body 6, and said second opening 8' receives a second, opposite part 7" protruding from said shaft 7 and forms the bearing for holding and guiding in rotation for this second part 7", said first and second openings 8 and 8' being located in zones of greater material thicknesses of the conduit portion 15 forming the end 4 of the pipe 3 in question.

In order to obtain a relatively high-quality seal in the region of each valve device 5 and to be able to absorb differences in stress or clearance between the various assembly sites, each piece 16 forming the plug and bearing has a truncated external shape and each lateral opening 8 of each assembly site has a complementary truncated internal shape, said piece 16 further comprising a rim or a collar 16' resting, in the assembled state of this piece 16, on the external edge of the lateral opening 8 in question.

In order to lock the valve devices 5 in position, without requiring a specific connection, and to contribute to improving the seal, the wall portion forming the cap 11 has on its internal face a continuous protruding part 11' or a plurality of aligned protruding parts 11', coming into contact with and resting on the pieces 16 forming the plug and bearing, in such a way as to keep them sunk under pressure in the lateral openings 7 respectively receiving them, after assembly of the two constituent parts 12 and 13.

According to another advantageous characteristic of the invention, allowing the overall structure of the hollow body 1' to be rigidified and the hollow body 1' to be connected, with an effective transmission of forces, the conduit portions 15 forming the free ends 4 of the pipes 3 are mutually integral and form a single-piece structure, also incorporating fixing flanges 18, a wing 19 supporting a longitudinal assembly zone with the cap 11 and a sliding track 20 for a bar or rod forming the control linkage 10.

As Figures 1 and 3 of the accompanying drawings show, the wall portion 11 forming the protective sealing cap preferably extends, in the form of a rectilinear structure, transversely relative to the free ends 4 of the pipes 3, as an extension of the wall segments of the second constituent part 13 partially forming the pipes 3, and forms, in cooperation with the conduit portions 15, joined together in a continuous structure, of the first constituent part 12, a closed space provided with a single opening 21, through which a bar or rod forming the control linkage 10 passes.

A single opening sealing process must thus be carried out after assembly of the hollow body 1' (a saving both in materials and in the production process).

According to a particular embodiment of the invention, also emerging from the aforementioned figures, each pipe 3 has two free ends 4, through internal subdivision into two branches, and ends in two conduit portions 15, only one of said conduit portions 15 being provided with a fitting site for a valve device 5.

The invention also relates to a method of producing an intake manifold 1 as described above, with, in particular, an intake chamber 2 and a plurality of pipes 3, some of which comprise valve-type regulating devices 5.

This method substantially consists in separately producing, on the one hand, a first single-piece part 12 incorporating a first wall portion of the hollow body 1' delimiting a part of the intake chamber 2 and forming a part of the pipes 3, with, in particular, conduit portions 15 forming the free ends 4 of said pipes 3 and comprising fitting sites for the valve devices 5, and, on the other hand, a second single-piece part 13 incorporating a second wall portion of the hollow body 1', which second portion is complementary to the first portion so as to delimit the intake chamber 2 and form the pipes 3, and an additional wall portion 11 forming the protective sealing cap, in installing the valve devices 5 in the corresponding assembly sites of the conduit portions 15 of the first part 12, together with the control linkage 10, then in precisely positioning the second part 13 on the first part 12, and, finally, in joining the two parts 12 and 13 by vibration welding in the region of the opposite cooperating and complementary peripheral assembly zones 14.

Advantageously, in order to streamline production, the method may consist in connecting, prior to their installation on the first part 12, the valve devices 5 to a bar or rod forming the control linkage 10, this bar or rod 10 then being held in place on this first part 12 by engagement with the control elements 9 of the support shafts 7 of the valve devices 5 installed in the respective assembly sites of said conduit portions 15 of the first part 12.

According to an additional characteristic of the invention, said method may further consist, after assembly of the two constituent parts 12 and 13, in sealing the opening 21 through which the external connection piece of the control linkage 10 provided laterally in the cap 11 passes and, if necessary, in connecting this connection piece to an appropriate actuator 17, and in introducing an inflow-regulating component 22 in the region of the feed opening 2' of the intake chamber 2 of the manifold 1.

## Claims

1. Intake manifold for a vehicle with an internal combustion engine, principally consisting of a hollow body defining an intake or plenum chamber and a plurality of pipes opening into said chamber at one of their ends, at least some of said pipes being provided in the region of their opposite or free end(s) with a flow-regulating component, in the form of a pivoting valve device, fitted with its rotatory support shaft in an assembly site comprising a lateral opening provided in the wall of said pipe, the rotational drive elements of the support shafts, the control linkage driving said drive elements and the lateral openings forming or receiving bearings for said support shafts being covered by a protective sealing cap extending in the region of said free ends of the pipes, intake manifold **characterised in that** said hollow body (1') is formed by two parts (12 and 13) joined by welding, adhesion or the like in the region of cooperating and complementary peripheral assembly zones (14) resulting from the partition of said hollow body (1') into two structural components, **in that** a first single-piece part (12) incorporates a first wall portion of the hollow body (1') delimiting a part of the intake chamber (2) and forming a part of the pipes (3), with conduit portions (15) forming the free ends (4) of said pipes (3) and comprising the fitting sites for the valve devices (5), and **in that** a second single-piece part (13) incorporates, on the one hand, a second wall portion of the hollow body (1'), which second portion is complementary to the first portion so as to delimit the intake chamber (2) and form the pipes (3), and, on the other hand, an additional wall portion forming the protective sealing cap.

2. Intake manifold according to claim 1, **characterised in that** each of the complementary constituent parts (12 and 13) of the hollow body (1') is a piece made of thermoplastic material, optionally filled or reinforced with fibres, produced by moulding, and **in that** the joining of said parts (12 and 13) results from a vibration welding process in the region of the cooperating assembly zones (14) of the two parts (12 and 13).

3. Intake manifold according to claim 1 or 2, **characterised in that** the fitting sites for the valve devices (5) are mutually aligned, and **in that** the wall portion (11) forming the cap has an elongate structure, said cap (11) being joined to the first constituent part (12) along two longitudinal edges of said cap (11).

4. Intake manifold according to any one of claims 1 to 3, **characterised in that** each valve device (5) consists of a preassembled assembly to be inserted, comprising a valve body (6), its support shaft (7), the rotational drive element (9) therefor and a piece (16) optionally forming a sealing plug for the lateral assembly opening (8) and a bearing for holding and guiding the support shaft (7).

5. Intake manifold according to claim 4, **characterised in that** the rotational drive element (9), which fastens the support shaft (7) of each valve device (5) in position, consists of a connecting link moulded onto the portion of the support shaft (7) that extends from the piece (16) forming the plug and bearing, said connecting link (9) comprising an opening (9') for receiving, with the possibility of pivoting, a finger or lug (10') forming part of the plurality of fingers or lugs (10') of a bar or rod (10) forming the control linkage and being able to be displaced in translation by an appropriate actuator (17) controlling the variable intake.

6. Intake manifold according to any one of claims 1 to 5, **characterised in that** each assembly site consists, on the one hand, of a lateral through-opening (8) provided in the wall of the conduit portion (15) forming the free end (4) of the pipe (3) in question and, on the other hand, of a second blind opening (8'), also provided in said end conduit portion (15) and located facing the aforementioned through-opening (8) and coaxially thereto, **in that** said first opening (8) receives the bearing (16) of the support shaft (7) of the valve device (5) installed in the region of said assembly site, together with a first part (7') protruding laterally from said shaft (7) relative to the valve body (6), and **in that** said second opening (8') receives a second, opposite part (7") protruding from said shaft (7) and forms the bearing for holding and guiding in rotation for this second part (7"), said first and second openings (8 and 8') being located in zones of greater material thicknesses of the conduit portion (15) forming the end (4) of the pipe (3) in question.

7. Intake manifold according to any one of claims 4 and 5, or according to claim 6, in so far as it relates to claim 4 or 5, **characterised in that** each piece (16) forming the plug and bearing has a truncated external shape and each lateral opening (8) of each assembly site has a complementary truncated internal shape, said piece (16) further comprising a rim or a collar (16') resting, in the assembled state of this piece (16), on the external edge of the lateral opening (8) in question.

8. Intake manifold according to any one of claims 4, 5 and 7, **characterised in that** the wall portion forming the cap (11) has on its internal face a continuous protruding part (11') or a plurality of aligned protruding parts (11'), coming into contact with and resting on the pieces (16) forming the plug and bearing, in such a way as to keep them sunk under pressure in the lateral openings (7) respectively receiving them.

9. Intake manifold according to any one of claims 1 to 8, **characterised in that** the conduit portions (15) forming the free ends (4) of the pipes (3) are mutually integral and form a single-piece structure, also incorporating fixing flanges (18), a wing (19) supporting a longitudinal assembly zone with the cap (11) and a sliding track (20) for a bar or rod forming the control linkage (10).

10. Intake manifold according to any one of claims 1 to 9, **characterised in that** the wall portion (11) forming the protective sealing cap extends, in the form of a rectilinear structure, transversely relative to the free ends (4) of the pipes (3), as an extension of the wall segments of the second constituent part (13) partially forming the pipes (3), and forms, in cooperation with the conduit portions (15), joined together in a continuous structure, of the first constituent part (12), a closed space provided with a single opening (21), through which a bar or rod forming the control linkage (10) passes.

11. Intake manifold according to any one of claims 1 to 10, **characterised in that** each pipe (3) has two free ends (4), through internal subdivision into two branches, and ends in two conduit portions (15), only one of said conduit portions (15) being provided with a fitting site for a valve device (5).

12. Method of producing an intake manifold according to any one of claims 1 to 11, with, in particular, an intake chamber and a plurality of pipes, some of which comprise valve-type regulating devices, **characterised in that** it substantially consists in separately producing, on the one hand, a first single-piece part (12) incorporating a first wall portion of the hollow body (1') delimiting a part of the intake chamber (2) and forming a part of the pipes (3), with conduit portions (15) forming the free ends (4) of said pipes (3) and comprising fitting sites for the valve devices (5), and, on the other hand, a second single-piece part (13) incorporating, on the one hand, a second wall portion of the hollow body (1'), which second portion is complementary to the first portion so as to delimit the intake chamber (2) and form the pipes (3), and, on the other hand, an additional wall portion (11) forming the protective sealing cap, in installing the valve devices (5) in the corresponding assembly sites of the conduit portions (15) of the first part (12), together with the control linkage (10), then in precisely positioning the second part (13) on the first part (12), and, finally, in joining the two parts (12 and 13) by vibration welding in the region of the opposite cooperating and complementary peripheral assembly zones (14).

13. Method according to claim 12, **characterised in that** it consists in connecting, prior to their installation on the first part (12), the valve devices (5) to a bar or rod forming the control linkage (10), this bar or rod (10) then being held in place on this first part (12) by engagement with the control elements (9) of the support shafts (7) of the valve devices (5) installed in the respective assembly sites of said conduit portions (15) of the first part (12).

14. Method according to claim 12 or 13, **characterised in that** it further consists, after assembly of the two constituent parts (12 and 13), in sealing the opening (21) through which the external connection piece of the control linkage (10) provided laterally in the cap (11) passes and, if necessary, in connecting this connection piece to an appropriate actuator (17), and in introducing an inflow-regulating component (22) in the region of the feed opening (2') of the intake chamber (2) of the manifold (1).

## Patentansprüche

1. Einlassverteiler für ein Fahrzeug mit einem Verbrennungsmotor, der im Wesentlichen aus einem Hohlkörper, der eine Einlass- bzw. Luftkammer bildet, und einer Vielzahl von Rohren besteht, die sich an einem ihrer Enden in die Kammer hinein öffnen, wobei wenigstens einige der Rohre in dem Bereich ihrer gegenüberliegenden bzw. freien Enden mit einem Strömungsregulier-Bauteil in Form einer Schwenkventilvorrichtung versehen sind, die mit ihrer Dreh-Tragewelle an einer Montageposition angebracht ist, die eine seitliche Öffnung umfasst, die in der Wand des Rohrs vorhanden ist, wobei die Drehantriebselemente der Tragewellen, das Steuergestänge, das die Antriebselemente antreibt, und die seitlichen Öffnungen, die Lager für die Tragewellen bilden oder aufnehmen, mit einer schützenden Abdichtkappe abgedeckt sind, die sich im Bereich der freien Enden der Rohre erstreckt, und der Einlassverteiler **dadurch gekennzeichnet ist, dass** der Hohlkörper (1') durch zwei Teile (12 und 13) gebildet wird, die durch Schweißen, Kleben oder dergleichen im Bereich zusammenwirkender und komplementärer Rand-Montagezonen (14) verbunden sind, die durch die Unterteilung des Hohlkörpers (1') in zwei strukturelle Bauteile entstehen, **dadurch**, dass ein erster aus einem Stück bestehender Teil (12) einen ersten Wandabschnitt des Hohlkörpers (1') einschließt, der einen Teil der Einlasskammer (2) begrenzt und einen Teil der Rohre (3) bildet, wobei Leitungsabschnitte (15) die freien Enden (4) der Rohre (3) bilden und die Anbringungspositionen für die Ventilvorrichtungen (5) umfassen, und **dadurch**, dass ein zweiter aus einem Stück bestehender Teil (13) einerseits einen zweiten Wandabschnitt des Hohlkörpers (1'), der komplementär zu dem ersten Abschnitt ist und die Einlasskammer (2) begrenzt und die Rohre (3) bildet, und andererseits einen zusätzlichen Wandabschnitt einschließt, der die schützende Abdichtkappe bildet.

2. Einlassverteiler nach Anspruch 1, **dadurch gekennzeichnet, dass** jedes der komplementären Einzelteile (12 und 13) des Hohlkörpers (1') ein aus Thermoplastmaterial bestehendes Teil ist, das optional mit Fasern gefüllt oder verstärkt ist und durch Formen hergestellt wird, und dass das Verbinden der Teile (12 und 13) aus einem Vibrationsschweißprozess im Bereich der zusammenwirkenden Montagezonen (14) der zwei Teile (12 und 13) resultiert.

3. Einlassverteiler nach Anspruch 1 oder 2, **dadurch gekennzeichnet, dass** die Anbringungspositionen für die Ventilvorrichtungen (5) aufeinander ausgerichtet sind, und dass der Wandabschnitt (11), der die Kappe bildet, eine längliche Struktur hat, wobei die Kappe (11) mit dem ersten Einzelteil (12) entlang zweier Längskanten der Kappe (11) verbunden ist.

4. Einlassverteiler nach einem der Ansprüche 1 bis 3, **dadurch gekennzeichnet, dass** jede Ventilvorrichtung (5) aus einer einzusetzenden vormontierten Baugruppe besteht, die einen Ventilkörper (6), seine Tragewelle (7), das Drehantriebselement (9) dafür und ein Teil (16) umfasst, das optional einen Abdichtstopfen für die seitliche Montageöffnung (8) und ein Lager zum Halten und Führen der Tragewelle (7) bildet.

5. Einlassverteiler nach Anspruch 4, **dadurch gekennzeichnet, dass** das Drehantriebselement (9), das die Tragewelle (7) jeder Ventilvorrichtung (5) in Position befestigt, aus einem Verbindungsglied besteht, das auf den Abschnitt der Tragewelle (7) geformt ist, der sich von dem Teil (16) aus erstreckt, das den Stopfen und das Lager bildet, wobei das Verbindungsglied (9) eine Öffnung (9') umfasst, die einen Finger oder Mitnehmer (10') schwenkbar aufnimmt, der einen Teil der Vielzahl von Fingern oder Mitnehmern (10') einer Stange bzw. eines Stabes (10) bildet, die/der das Steuergestänge bildet und in Translationsbewegung durch ein entsprechendes Stellglied (17) verschoben werden kann, das den variablen Einlass steuert.

6. Einlassverteiler nach einem der Ansprüche 1 bis 5, **dadurch gekennzeichnet, dass** jede Montagezone einerseits aus einer seitlichen Durchgangsöffnung (8), die in der Wand des Leitungsabschnitts (15) vorhanden ist, der das freie Ende (4) des betreffenden Rohres (3) bildet, und andererseits aus einer zweiten Sacköffnung (8') besteht, die ebenfalls in dem End-Leitungsabschnitt (15) vorhanden ist und der Durchgangsöffnung (8) zugewandt und koaxial dazu angeordnet ist, **dadurch**, dass die erste Öffnung (8) das Lager (16) der Tragewelle (7) der Ventilvorrichtung (5), die in dem Bereich der Montageposition installiert ist, zusammen mit einem ersten Teil (7') aufnimmt, der relativ zu dem Ventilkörper (6) seitlich von der Welle (7) vorsteht, und **dadurch**, dass die zweite Öffnung (8') einen zweiten, gegenüberliegenden Teil (7") aufnimmt, der von der Welle (7) vorsteht und bei Drehung das Lager zum Halten und Führen für diesen zweiten Teil (7") bildet, wobei die erste und die zweite Öffnung (8 und 8') in Zonen größerer Materialdicke des Leitungsabschnitts (15) angeordnet sind, der das Ende (4) des betreffenden Rohres (3) bildet.

7. Einlassverteiler nach einem der Ansprüche 4 und 5 oder nach Anspruch 6, sofern auf Anspruch 4 oder 5 bezogen, **dadurch gekennzeichnet, dass** jedes Teil (16), das den Stopfen und das Lager bildet, eine abgeschnittene Außenform hat und jede seitliche Öffnung (8) jeder Montageposition eine komplementäre abgeschnittene Innenform hat, wobei das Teil (16) des Weiteren einen Rand oder Bund (16') umfasst, der in dem montiertem Zustand dieses Teils (16) auf einer Außenkante der betreffenden seitlichen Öffnung (8) aufliegt.

8. Einlassverteiler nach einem der Ansprüche 4, 5 und 7, **dadurch gekennzeichnet, dass** der Wandabschnitt, der die Kappe (11) bildet, an seiner Innenfläche einen durchgehenden vorstehenden Teil (11') oder eine Vielzahl ausgerichteter vorstehender Teile (11') aufweist, die mit den Teilen (16), die den Stopfen und das Lager bilden, so in Kontakt kommen und auf ihm aufliegen, dass sie sie unter Druck in den seitlichen Öffnungen (7), die sie jeweils aufnehmen, versenkt halten.

9. Einlassverteiler nach einem der Ansprüche 1 bis 8, **dadurch gekennzeichnet, dass** die Leitungsabschnitte (15), die die freien Enden (4) der Rohre (3) bilden, integral miteinander ausgebildet sind und eine aus einem Stück bestehende Struktur bilden, die auch Befestigungsflansche (18), einen Flügel (19), der eine Längs-Montagezone mit der Kappe (11) trägt, und eine Gleitbahn (20) für eine Stange bzw. einen Stab einschließt, die/der das Steuergestänge (10) bildet.

10. Einlassverteiler nach einem der Ansprüche 1 bis 9, **dadurch gekennzeichnet, dass** der Wandabschnitt (11), der die schützende Abdichtkappe bildet, sich in der Form einer geradlinigen Struktur quer relativ zu den freien Enden (4) der Rohre (3) als eine Verlängerung der Wandsegmente des zweiten Einzelteils (13) erstreckt, die teilweise die Rohre (3) bilden, und im Zusammenwirken mit den in einer durchgehenden Struktur miteinander verbundenen Leitungsabschnitten (15) des ersten Einzelteils (12) einen geschlossenen Raum bildet, der mit einer einzelnen Öffnung (21) versehen ist, durch die eine Stange bzw. ein Stab, die/der das Steuergestänge (10) bildet, hindurchtritt.

11. Einlassverteiler nach einem der Ansprüche 1 bis 10, **dadurch gekennzeichnet, dass** jedes Rohr (3) durch innere Unterteilung in zwei Verzweigungen zwei freie Enden (4) aufweist und in zwei Leitungsabschnitten (15) endet, wobei nur einer der Leitungsabschnitte (15) mit einer Anbringungsposition für eine Ventilvorrichtung (5) versehen ist.

12. Verfahren zum Herstellen eines Einlassverteilers nach einem der Ansprüche 1 bis 11, insbesondere mit einer Einlasskammer und einer Vielzahl von Rohren, von denen einige ventilartige Reguliervorrichtungen umfassen, **dadurch gekennzeichnet, dass** es im Wesentlichen aus dem separaten Herstellen eines ersten aus einem Stück bestehenden Einzelteils (12) einerseits, das einen ersten Wandabschnitt des Hohlkörpers (1') einschließt, der einen Teil der Einlasskammer (2) begrenzt und einen Teil der Rohre (3) bildet, wobei Leitungsabschnitte (15) die freien Enden (4) der Rohre (3) bilden und Montagepositionen für die Ventilvorrichtungen (5) umfassen, und eines zweiten aus einem Stück bestehenden Teils (13) andererseits, der einen zweiten Wandabschnitt des Hohlkörpers (1') einschließt, wobei der zweite Abschnitt komplementär zu dem ersten Abschnitt ist, so dass die Einlasskammer (2) begrenzt und die Rohre (3) gebildet werden, sowie eines zusätzlichen Wandabschnitts (11) andererseits, der die schützende Abdichtkappe bildet, aus dem Installieren der Ventilvorrichtungen (5) an den entsprechenden Montagepositionen der Leitungsabschnitte (15) des ersten Teils (12) zusammen mit dem Steuergestänge (10), aus dem anschließenden genauen Positionieren des zweiten Teils (13) an dem ersten Teil (12) und dem abschließenden Verbinden der zwei Teile (12 und 13) durch Vibrationsschweißen in dem Bereich der einander gegenüberliegenden zusammenwirkenden und komplementären Rand-Montagezonen (14) besteht.

13. Verfahren nach Anspruch 12, **dadurch gekennzeichnet, dass** es aus dem Verbinden der Ventilvorrichtungen (5) mit einer Stange bzw. einem Stab, die/der das Steuergestänge (10) bildet, vor ihrer Installation an dem ersten Teil (12) besteht, wobei diese Stange bzw. dieser Stab (10) dann durch Eingriff mit den Steuerelementen (9) der Tragewellen (7) der Ventilvorrichtungen (5), die an den jeweiligen Montagepositionen der Leitungsabschnitte (15) des ersten Teils (12) installiert sind, an diesem ersten Teil (12) festgehalten werden.

14. Verfahren nach Anspruch 12 oder 13, **dadurch gekennzeichnet, dass** es des Weiteren aus Abdichten der Öffnung (21) nach Montage der zwei Einzelteile (12 und 13), durch die das äußere Verbindungsteil des Steuergestänges (10), das seitlich in der Kappe (11) vorhanden ist, hindurchtritt, und, wenn erforderlich, Verbinden dieses Verbindungsteils mit einem geeigneten Stellglied (17) und Einsetzen eines Einström-Regulierbauteils (22) in den Bereich der Zuführöffnung (2') der Einlasskammer (2) des Verteilers (1) besteht.

## Revendications

1. Collecteur d'admission pour véhicule à moteur à combustion interne, principalement constitué d'un corps creux définissant une chambre d'admission ou plénum et une pluralité de tubulures débouchant dans ladite chambre à l'une de leurs extrémités, au moins certaines desdites tubulures étant pourvues au niveau de leur(s) extrémité(s) opposée(s) ou libre(s) d'un organe de régulation du flux, sous la forme d'un dispositif à clapet pivotant monté avec son axe support rotatoire dans un site de montage comprenant un orifice latéral ménagé dans la paroi de ladite tubulure, les éléments d'entraînement en rotation des axes support, la tringlerie de commande entraînant lesdits éléments d'entraînement et les orifices latéraux formant ou recevant des paliers pour lesdits axes support étant recouverts par un capot de protection et d'étanchéification s'étendant au niveau desdites extrémités libres des tubulures, collecteur d'admission **caractérisé en ce que** ledit corps creux (1') est formé de deux parties (12 et 13) assemblées par soudure, collage ou analogue au niveau de zones d'assemblage périphériques coopérantes et complémentaires (14) résultant de la partition dudit corps creux (1') en deux composantes structurelles, **en ce qu'**une première partie (12) d'un seul tenant intègre une première portion de paroi du corps creux (1') délimitant une partie de la chambre d'admission (2) et formant une partie des tubulures (3), avec des portions de conduit (15) formant les extrémités libres (4) desdites tubulures (3) et comportant les sites de montage des dispositifs à clapet (5), et **en ce qu'**une seconde partie (13) d'un seul tenant intègre, d'une part, une seconde portion de paroi du corps creux (1'), complémentaire de la première portion pour délimiter la chambre d'admission (2) et former les tubulures (3), et, d'autre part, une portion de paroi additionnelle formant le capot de protection et d'étanchéification.

2. Collecteur d'admission selon la revendication 1, **caractérisé en ce que** chacune des parties complémentaires (12 et 13) constitutives du corps creux (1') est une pièce en matériau thermoplastique, éventuellement chargé ou renforcé par des fibres, venue de moulage et **en ce que** l'assemblage desdites parties (12 et 13) résulte d'une opération de soudage par vibration au niveau des zones d'assemblage coopérantes (14) des deux parties (12 et 13).

3. Collecteur d'admission selon la revendication 1 ou 2, **caractérisé en ce que** les sites de montage des dispositifs à clapet (5) sont alignés entre eux et **en ce que** la portion de paroi (11) formant le capot présente une structure allongée, ledit capot (11) étant solidarisé avec la première partie constitutive (12) le long de deux bords longitudinaux dudit capot (11).

4. Collecteur d'admission selon l'une quelconque des revendications 1 à 3, **caractérisé en ce que** chaque dispositif à clapet (5) consiste en un ensemble à insérer préassemblé et comprenant un corps de clapet (6), son axe support (7), l'élément (9) d'entraînement en rotation de ce dernier et une pièce (16) formant éventuellement bouchon d'obturation de l'orifice latéral de montage (8) et palier de maintien et de guidage de l'axe support (7).

5. Collecteur d'admission selon la revendication 4, **caractérisé en ce que** l'élément (9) d'entraînement en rotation et d'assujettissement en position de l'axe support (7) de chaque dispositif à clapet (5) consiste en une biellette surmoulée sur la portion de l'axe support (7) dépassant de la pièce (16) formant bouchon et palier, ladite biellette (9) comportant un orifice (9') de réception avec faculté de pivotement d'un doigt ou ergot (10') faisant partie de la pluralité de doigts ou d'ergots (10') d'une barre ou tige (10) formant la tringlerie de commande et pouvant être déplacée en translation sous l'effet d'un actionneur adapté (17) contrôlant l'admission variable.

6. Collecteur d'admission selon l'une quelconque des revendications 1 à 5, **caractérisé en ce que** chaque site de montage consiste, d'une part, en un premier orifice latéral (8) traversant ménagé dans la paroi de la portion de conduit (15) formant l'extrémité libre (4) de la tubulure (3) concernée et, d'autre part, en un second orifice borgne (8'), également ménagé dans ladite portion de conduit d'extrémité (15) et situé en regard de l'orifice traversant (8) précité et coaxialement à ce dernier, **en ce que** ledit premier orifice (8) reçoit le palier (16) de l'axe support (7) du dispositif à clapet (5) mis en place au niveau dudit site de montage ensemble avec une première partie (7') saillante latéralement dudit axe (7) par rapport au corps de clapet (6), et **en ce que** ledit second orifice (8') reçoit une seconde partie saillante opposée (7") dudit axe (7) et forme palier de maintien et de guidage en rotation pour cette seconde partie (7"), lesdits premier et second orifices (8 et 8') étant situés dans des zones d'épaisseurs de matière plus importantes de la portion de conduit (15) formant l'extrémité (4) de la tubulure (3) concernée.

7. Collecteur d'admission selon l'une quelconque des revendications 4 et 5 ou selon la revendication 6 pour autant qu'elle se rattache à la revendication 4 ou 5, **caractérisé en ce que** chaque pièce (16) formant bouchon et palier présente une forme extérieure tronconique et chaque orifice latéral (8) de chaque site de montage présente une forme intérieure tronconique complémentaire, ladite pièce (16) comportant en outre un rebord ou une collerette (16') prenant appui, à l'état monté de cette pièce (16), sur le bord extérieur de l'orifice latéral (8) concerné.

8. Collecteur d'admission selon l'une quelconque des revendications 4, 5 et 7, **caractérisé en ce que** la portion de paroi formant capot (11) présente sur sa face interne une partie saillante (11') continue ou une pluralité de parties saillantes (11') alignées venant en contact avec appui sur les pièces (16) formant bouchon et palier, de manière à les maintenir enfoncées sous pression dans les orifices latéraux (7) les recevant respectivement.

9. Collecteur d'admission selon l'une quelconque des revendications 1 à 8, **caractérisé en ce que** les portions de conduit (15) formant les extrémités libres (4) des tubulures (3) sont solidaires entre elles et forment une structure d'un seul tenant, intégrant également des brides de fixation (18), une aile (19) supportant une zone d'assemblage longitudinale avec le capot (11) et un chemin de coulissement (20) pour une barre ou tige formant tringlerie de commande (10).

10. Collecteur d'admission selon l'une quelconque des revendications 1 à 9, **caractérisé en ce que** la portion de paroi (11) formant capot de protection et d'étanchéification s'étend, sous forme de structure rectiligne, transversalement par rapport aux extrémités libres (4) des tubulures (3), en tant que prolongement des segments de paroi de la seconde partie constitutive (13) formant partiellement les tubulures (3), et constitue en coopération avec les portions de conduit (15), mutuellement solidarisées en une structure continue, de la première partie constitutive (12), un volume fermé pourvu d'une unique ouverture (21) pour le passage d'une barre ou tige formant tringlerie de commande (10).

11. Collecteur d'admission selon l'une quelconque des revendications 1 à 10, **caractérisé en ce que** chaque tubulure (3) présente deux extrémités libres (4) par subdivision interne en deux branches et se termine par deux portions de conduit (15), seul l'une desdites portions de conduit (15) étant pourvue d'un site de montage d'un dispositif à clapet (5).

12. Procédé de fabrication d'un collecteur d'admission selon l'une quelconque des revendications 1 à 11, avec notamment une chambre d'admission et une pluralité de tubulures, dont certaines comportent des dispositifs de régulation à clapet, **caractérisé en ce qu'**il consiste essentiellement à produire séparément, d'une part, une première partie (12) d'un seul tenant intégrant une première portion de paroi du corps creux (1') délimitant une partie de la chambre d'admission (2) et formant une partie des tubulures (3), avec des portions de conduit (15) formant les extrémités libres (4) desdites tubulures (3) et comportant des sites de montage des dispositifs à clapet (5), et d'autre part, une seconde partie (13) d'un seul tenant intégrant, d'une part, une seconde portion de paroi du corps creux (1'), complémentaire de la première portion pour délimiter la chambre d'admission (2) et former les tubulures (3), et, d'autre part, une portion de paroi additionnelle (11) formant le capot de protection et d'étanchéification, à mettre en place les dispositifs à clapet (5) dans les sites de montage correspondants des portions de conduit (15) de la première partie (12), ensemble avec la tringlerie de commande (10), puis à positionner précisément la seconde partie (13) sur la première partie (12), et, enfin à assembler les deux parties (12 et 13) par soudure par vibration au niveau des zones d'assemblage périphériques coopérantes et complémentaires (14) en regard.

13. Procédé selon la revendication 12, **caractérisé en ce qu'**il consiste à assembler, préalablement à leur mise en place sur la première partie (12), les dispositifs à clapet (5) avec une barre ou tige formant tringlerie de commande (10), cette barre ou tige (10) étant ensuite maintenue en place sur cette première partie (12) par engagement avec les éléments de commande (9) des axes support (7) des dispositifs à clapet (5) mis en place dans les sites de montage respectifs desdites portions de conduit (15) de la première partie (12).

14. Procédé selon la revendication 12 ou 13, **caractérisé en ce qu'**il consiste, en outre, après assemblage des deux parties constitutives (12 et 13), à étanchéifier l'ouverture (21) de passage de la pièce de liaison externe de la tringlerie de commande (10) prévue latéralement dans le capot (11), et, le cas échéant, à raccorder cette pièce de liaison à un actionneur (17) adapté et à rapporter un organe (22) de régulation du flux d'entrée au niveau de l'ouverture d'alimentation (2') de la chambre d'admission (2) du collecteur (1).
